# EUROPÄISCHE PATENTSCHRIFT

(11) **EP 1 725 364 B1**
(45) Veröffentlichungstag und Bekanntmachung des Hinweises auf die Patenterteilung: **01.10.2008**
(21) Anmeldenummer: 05701299.9
(22) Anmeldetag: 02.02.2005
(51) Int. Cl.: B23F 19/10, B23F 19/12

(54) **VORRICHTUNG UND VERFAHREN ZUM STIRNSEITIGEN ENTGRATEN VON VERZAHNTEN BAUTEILEN**
DEVICE AND METHOD FOR FRONTAL DEBURRING TOOTHED COMPONENTS
DISPOSITIF ET PROCEDE D'EBAVURAGE FRONTAL DE COMPOSANTS DENTES

(30) Priorität: 18.03.2004 DE 102004013266
(43) Veröffentlichungstag der Anmeldung: 29.11.2006
(73) Patentinhaber: ZF FRIEDRICHSHAFEN Aktiengesellschaft, 88038 Friedrichshafen (DE)
(72) Erfinder: HERTKORN, Rainer, 88094 Oberteuringen (DE)
(86) Internationale Anmeldenummer: PCT/EP2005/001006
(87) Internationale Veröffentlichungsnummer: WO 2005/097386

(56) Entgegenhaltungen:
- EP-A- 0 522 448
- DE-A- 19 900 423
- DE-U- 29 801 318

## Beschreibung

Die Erfindung betrifft eine Vorrichtung sowie ein Verfahren zum Entgraten von verzahnten Bauteilen nach der im Oberbegriff von Anspruch 1 näher definierten Art. Siehe, zum Beispiel DE 199 00 423.

Vorrichtungen und Verfahren zum Bearbeiten der Stirnkanten der Zähne eines Werkstückzahnrades sind aus dem Stand der Technik in verschiedenen Ausführungen bekannt. Diese Vorrichtungen zum Bearbeiten der Stirnkanten der Zähne eines Werkstückzahnrades, das von einer mit einem kontinuierlichen, umlaufenden Drehantrieb versehenen Werkstückspindel aufnehmbar ist, weisen ein von einem Werkzeughalter aufgenommenes, fingerförmiges Formwerkzeug auf, das mit einem vom Drehantrieb drehzahlunabhängigen Antrieb zum Drehen um seine eigene Achse gekoppelt ist, wobei eine Einrichtung zur Erzeugung periodischer, auf die Werkstückzahnraddrehung abgestimmter Relativbewegungen zwischen den Zähnen des Werkstückzahnrades und dem Formwerkzeug vorgesehen ist, und der Werkzeughalter längs seiner Achse sowie quer dazu verschiebbar ist.

In der EP 0 522 448 B1 wird eine Vorrichtung mit zugehörigem Verfahren zum Entgraten oder Anfasen der Stirnkanten mit einem fingerförmigen Formwerkzeug vorgeschlagen, wobei das zum Entgraten oder Anfasen verwendete Formwerkzeug ein Profil aufweist, das wenigstens angenähert dem Zahnprofil der Verzahnung eines gedachten Gegenrades entspricht, wobei der Werkzeughalter mit einem Drehantrieb versehen und das Formwerkzeug in dem Werkzeughalter radial zur Achse des gedachten Gegenrades ausgerichtet gelagert ist, so dass das Formwerkzeug bei Drehung mit dem Werkzeughalter um dessen Achse um die Achse des gedachten Gegenrades gedreht wird, wobei die Drehantriebe für die Werkstückspindel und den Werkzeughalter durch eine CNC-Steuerung entsprechend einem ungeraden Verhältnis einer gewählten Zähnezahl des Gegenrades zur Zähnezahl des Werkstückzahnrades zur Erzeugung einer Wälzbewegung zwischen dem Werkstückzahnrad und dem fingerförmigen Formwerkzeug synchronisiert sind. Als Werkzeug dient hierbei ein fingerförmiger Schleifkörper oder ein fingerförmiger Hochgeschwindigkeitsfräser, wobei das Werkzeug kontinuierlich mit dem Werkstückzahnrad abwälzend in Eingriff steht und ein Profil wenigstens angenähert entsprechend dem Zahnprofil eines gedachten Gegenrades aufweist.

Die aus dem Stand der Technik bekannten Vorrichtungen und Verfahren zum Entgraten von verzahnten Bauteilen weisen aufwendige Mechanismen auf, bei denen der Anpreßdruck des Werkzeugs nicht oder nur eingeschränkt einstellbar ist. Die aus dem Stand der Technik bekannten Vorrichtungen und Verfahren ermöglichen es weiterhin nicht, die Werkzeuge zu kontrollieren sowie die Werkzeuge in vollautomatische Fertigungsabläufe zu integrieren. Weiterhin besteht keine Möglichkeit, eine Grundeinstellung des Werkzeugs abzufragen, wodurch komplizierte und aufwendige Einstellvorgänge vorgenommen werden müssen. Die nach dem Stand der Technik zu verwendenden fingerförmigen Werkzeuge sind nicht universell einsetzbar und müssen jeweils an das zu entgratende Werkstück angepaßt werden. Dadurch müssen viele unterschiedliche Werkzeuge bereitgestellt und überwacht werden, was einen erheblichen Aufwand an Lagerhaltung und Überprüfung erfordert.

Der vorliegenden Erfindung liegt die Aufgabe zugrunde, eine Vorrichtung sowie ein Verfahren zum stirnseitigen Entgraten von verzahnten Bauteilen darzustellen, welches universell eingesetzt werden kann sowie in vollautomatische Fertigungsabläufe integrierbar ist.

Die der Erfindung zugrunde liegende Aufgabe wird durch eine, auch die kennzeichnenden Merkmale des Hauptanspruchs aufweisende, gattungsgemäße Vorrichtung sowie ein zugehöriges Verfahren zum stirnseitigen Entgraten von verzahnten Bauteilen gelöst.

Durch Verwendung eines fingerförmigen Entgratwerkzeugs, das in einer Werkzeugaufnahme gehalten wird, die wiederum in einem Gehäuse gelagert ist, und die mit Hilfe eines Schwenkantriebs pneumatisch und/oder hydraulisch an das verzahnte Bauteil gedrückt werden kann und wieder aktiv vom Werkstück abgehoben wird, ist es möglich, mit nur einem Werkzeug, welches in vollautomatische Abläufe eingebunden werden kann, eine Vielzahl von unterschiedlichen, verzahnten Werkstücken zu bearbeiten.

Die erfindungsgemäße Lösung ermöglicht weiterhin eine Werkzeugkontrolle über berührungslose Sensoren, mit denen das fingerförmige Werkzeug auf Verschleiß und/oder Beschädigungen überwacht wird. Das fingerförmige Werkzeug kann ein Fräs- oder Schleifwerkzeug sein, welches durch den Schwenkantrieb gegen das zu entgratende Bauteil gedrückt und aktiv wieder abgehoben wird. Der Schwenkantrieb wird über einen Druckminderer angesteuert, wodurch der Anpreßdruck des fingerförmigen Werkzeugs am Werkstück geregelt wird. Durch die platzsparende Bauweise der erfindungsgemäßen Vorrichtung ist es möglich, einen großen Schwenkbereich des Werkzeugs darzustellen, was große Freiheiten in der Werkstückzu- und -ab-führung erlaubt. Weiterhin ist es möglich, auch Werkstücke mit Fase zu entgraten. Durch den spiegelbildlichen Aufbau der Erfindung werden keine gesonderten Ausführungen für links- bzw. rechtsverzahnte Bauteile erforderlich.

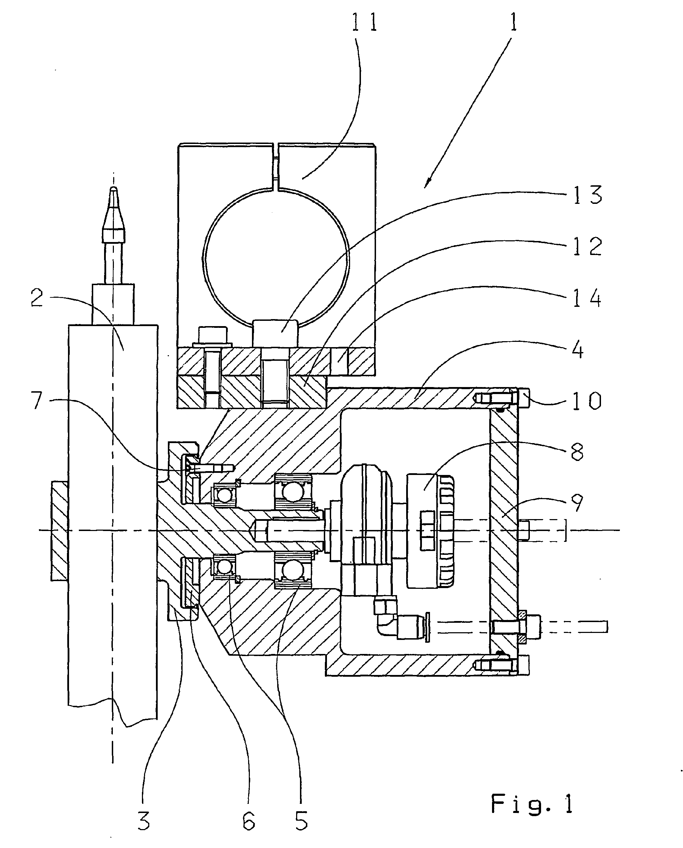

Die vorliegende Erfindung einer Vorrichtung zum stirnseitigen Entgraten von verzahnten Bauteilen wird anhand eines in der Figur dargestellten Ausführungsbeispiels näher erläutert.

Die einzige Figur zeigt die erfindungswesentlichen Bauteile einer erfindungsgemäßen Vorrichtung 1 zum stirnseitigen Entgraten von verzahnten Bauteilen mit einem fingerförmigen Entgratwerkzeug 2, welches in einer Aufnahme 3 gehalten wird. Die Aufnahme 3 ist in einem Gehäuse 4 über Lager 5 gelagert. Ein Deckel 6 ist über Befestigungselemente 7 mit dem Gehäuse 4 drehfest verbunden. Ein Schwenkantrieb 8 ist drehfest mit der Aufnahme 3 verbunden. Ein Deckel 9 ist durch Befestigungselemente 10 mit dem Gehäuse 4 verbunden. Ein Klemmstück 11 ist über Befestigungselemente 13 mit einer Platte 12 verbunden. Das Klemmstück 11 weist Nuten 14 auf, in denen das Klemmstück 11 verschoben werden kann und die endgültige Lage durch Befestigungsmittel 15 fixiert wird.

### Bezugszeichen

- 1: Vorrichtung
- 2: Entgratwerkzeug
- 3: Aufnahme
- 4: Gehäuse
- 5: Lager
- 6: Deckel
- 7: Befestigungselemente
- 8: Schwenkantrieb
- 9: Deckel
- 10: Befestigungselemente
- 11: Klemmstück
- 12: Platte
- 13: Befestigungselemente
- 14: Nuten
- 15: Befestigungsmittel

## Patentansprüche

1. Vorrichtung (1) zum stirnseitigen Entgraten von verzahnten Bauteilen mit einem fingerförmigen Entgratwerkzeug (2), das in einer Aufnahme (3) gehalten wird, die in einem Gehäuse (4) gelagert ist, die Aufnahme (3) mit dem fingerförmigen Entgratwerkzeug (2) mit Hilfe eines Schwenkantriebs (8) pneumatisch und/oder hydraulisch an das verzahnte Bauteil gedrückt und nach dem Entgraten aktiv vom verzahnten Bauteil abgehoben wird, **dadurch gekennzeichnet, dass** der Schwenkantrieb (8) über einen Druckminderer angesteuert und somit der Anpreßdruck des fingerförmigen Entgratwerkzeugs (2) am verzahnten Bauteil geregelt wird.

2. Vorrichtung (1) nach Anspruch 1, **dadurch gekennzeichnet, dass** das fingerförmige Entgratwerkzeug (2) ein Fräs- oder Schleifwerkzeug ist.

3. Vorrichtung (1) nach Anspruch 1, **dadurch gekennzeichnet, dass** in der Vorrichtung (1) berührungslose Sensoren integriert sind, mit denen das fingerförmige Entgratwerkzeug (2) auf Verschleiß und/oder Beschädigungen überwacht wird.

4. Verfahren zum stirnseitigen Entgraten von verzahnten Bauteilen mit einer Vorrichtung (1) nach einem der vorangegangenen Ansprüche, mit einem fingerförmigen Entgratwerkzeug (2), das in einer Aufnahme (3) gehalten wird, die in einem Gehäuse (4) gelagert ist, wobei die Aufnahme (3) mit dem fingerförmigen Entgratwerkzeug (2) mit Hilfe eines Schwenkantriebs (8) an das verzahnte Bauteil gedrückt und nach dem Entgraten aktiv vom verzahnten Bauteil abgehoben wird, und der Schwenkantrieb (8) über einen Druckminderer angesteuert und somit der Anpreßdruck des fingerförmigen Entgratwerkzeugs (2) am verzahnten Bauteil geregelt wird.

## Claims

1. Device (1) for front-end bur removel on toothed components with a finger-shaped bur removal tool (2), which is held in a mount (3), which is supported in a housing (4), with the mount (3) with the finger-shaped bur removal tool (2) being pneumatically and/or hydraulically pressed against the toothed component with the aid of a slewing drive (8), and actively lifted off the toothed component again after bur removal, **characterized in that** the slewing drive (8) is controlled by a pressure reducer and thus the pressure force of the finger-shaped bur removal tool (2) exerted on the toothed component is controlled.

2. Device (1) according to claim 1, **characterized in that** the finger-shaped bur removal tool (2) is a milling or a grinding tool.

3. Device (1) according to claim 1, **characterized in that** the device (1) features integrated noncontact sensors monitoring the finger-shaped bur removal tool (2) for wear and/or damage.

4. Method for front-end bur removal on toothed components with a device (1) according to one of the preceding claims, with a finger-shaped bur removal tool (2), which is held in a mount (3), which is supported in a housing (4), with the mount (3) with the finger-shaped bur removal tool (2) being pressed against the toothed component with the aid of a slewing drive (8), and actively lifted off the toothed component again after bur removal, and the slewing drive (8) being controlled by a pressure reducer and thus the pressure force of the finger-shaped bur removal tool (2) exerted on the toothed component being controlled.

## Revendications

1. Dispositif (1) pour ébavurage frontal de composants dentés, comprenant un outil d'ébavurage en forme de doigt (2), celui-ci étant maintenu dans un support (3) logé dans un carter (4), ledit support (3) étant - à l'aide de l'outil d'ébavurage en forme de doigt (2) et à l'aide d'un entraînement pivotant (8) - pressé par voie pneumatique et/ou hydraulique contre le composant denté et, après ébavurage, activement retiré du composant denté, **caractérisé en ce que** l'entraînement pivotant (8) est piloté par un réducteur de pression, permettant ainsi de régler la pression exercée par l'outil d'ébavurage en forme de doigt (2) sur le composant denté.

2. Dispositif (1) selon la revendication 1, **caractérisé en ce que** l'outil d'ébavurage en forme de doigt (2) est un outil de fraisage ou de rectification.

3. Dispositif (1) selon la revendication 1, **caractérisé en ce que** dans le dispositif (1) sont intégrés des capteurs sans contact, ceux-ci surveillant l'outil d'ébavurage en forme de doigt (2) pour détecter toute usure et/ou dégât.

4. Procédé pour ébavurage frontal de composants dentés avec un dispositif (1) selon une des revendications précédentes, comprenant un outil d'ébavurage en forme de doigt (2), celui-ci étant maintenu dans un support (3) logé dans un carter (4), sachant que le support (3) est - à l'aide de l'outil d'ébavurage en forme de doigt (2) et à l'aide d'un entraînement pivotant (8) - pressé contre le composant denté et, après ébavurage, activement retiré du composant denté, et sachant que l'entraînement pivotant (8) est piloté par un réducteur de pression, permettant ainsi de régler la pression exercée par l'outil d'ébavurage en forme de doigt (2) sur le composant denté.
